# EUROPEAN PATENT APPLICATION

(11) **EP 3 892 663 A1**
(43) Date of publication of application: **13.10.2021**
(21) Application number: 20169158.1
(22) Date of filing: 09.04.2020
(51) Int. Cl.: C08G 18/76, C08G 18/48, C08G 18/32, C08G 18/66, C08G 18/18

(54) **RIGID POLYURETHANE FOAM**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a rigid polyurethane foam and use thereof in automobile interiors. The polyurethane foam is prepared by the reaction of a reaction system comprising a polyisocyanate, a polyether polyol, a crosslinking agent, a foaming agent, etc. The rigid polyurethane foam of the present invention has good physical properties.

## Description

### Technical field

The invention relates to a rigid polyurethane foam, a polyurethane composite board and use thereof in automobile interiors.

### Prior Art

It is known in the industry that polyurethane foams can be used to produce sandwich structures for automotive interiors, such as roof linings and pillar trims, etc. However, people are demanding the comfort of automobiles and furniture increasingly with the rapid development of the economy. Nowadays, the polyurethane products are required in automotive industry to show higher levels of physical properties while having lower VOC volatilization, low fogging, and low odor. However, the examination and approval period for raw materials in the automotive industry is very long, and new raw materials are often difficult to be accepted. An urgent problem to be solved in the industry is how to improve the physical properties of polyurethane products while ensuring their low odor.

US4957944A discloses a solution to reduce the odor by using a hydroxyl-containing amine catalyst in the polyurethane foam system. However, this solution failed to achieve both good physical properties and low odor of the polyurethane foam by optimizing the combination of the catalyst and other raw materials.

CN103221445B discloses a process for producing resilient, flexible polyurethane foams that function well in noise and vibration absorption for vehicle applications which are made from a blend of polyols (i), an isocyanate (ii) and an autocatalytic polyol, etc.

CN106632952A discloses a thermoformable polyurethane foam and a preparation method thereof. The thermoformable polyurethane foam comprises component A and component B, wherein component A comprises a polyether glycol, a catalyst, a foaming agent, etc.; and component B is isocyanate. The thermoformable polyurethane foam is prepared by mixing component A and the component B at a mass ratio of 1: 1 to 1:7, preferably 1:1.55 to 1.65, and foaming. The foam has a glass transition temperature of 160 to 170 °C and a good thermoformability at a mold temperature of 110 to 130 °C. Especially, the foam can be well adapted to the preparation of vehicle roofs of various shapes.

CN103635503B discloses a flexible polyurethane foam having a low density, which is a reaction product of a reaction system including at least one polyol and at least one isocyanate comprising at least 50 wt% of a MDI-based isocyanate. The flexible polyurethane foam has a density of less than about 33 kg/m³ as measured according to ASTM D 3574-01, a tear strength of more than about 160 N/m as measured according to NBR 8515:2003 and a resilience of at least 45% as measured according to ASTM D-3574-H.

Despite the above disclosures, the market still needs desperately a rigid polyurethane foam with better quality, low odor, and good physical properties to meet the requirements of the automotive and furniture industries, etc.

### Summary of the invention

One aspect of the present invention is to provide a method for preparing a rigid polyurethane foam having an open-cell content of > 50% by volume (measured according to DIN ISO 4590-86), including preparing said rigid polyurethane foam by the reaction of a reaction system comprising the following components:
Component A, a polyisocyanate;
Component B, comprising:
   B1) an EO- and/or PO-terminated polyether polyol started with glycerol, sucrose and/or sorbitol having a weight average molecular weight of 6000 to 7200 g/mol (measured according to GBT 21863-2008), preferably 6300 to 7000 g/mol and an EO content of > 15.0 wt%, preferably ≥ 16.0 wt%, particularly preferably 17.0 to 25.0 wt%, based on the total weight of B1), in an amount of 20 to 50 wt%, preferably 30 to 45 wt%, based on the total weight of component B;
   B2) a PO-terminated polyether polyol started with glycerol having a weight average molecular weight of 250 to 500 g/mol (measured according to GBT 21863-2008), preferably 300 to 400 g/mol, in an amount of 25 to 50 wt%, preferably 30 to 45 wt%, based on the total weight of component B;
   B3) a PO-terminated polyether polyol started with propylene glycol having a weight average molecular weight of 300 to 500 g/mol (measured according to GBT 21863-2008), preferably 350 to 430 g/mol, in an amount of 9 to 32 wt%, preferably 21 to 29 wt%, more preferably 22 to 29 wt%, based on the total weight of component B;
   B4) a crosslinking agent in an amount of 5 to 8 wt%, based on the total weight of component B; said crosslinking agent being preferably glycerol;
   B5) a foaming agent in an amount of 2 to 8 wt%, preferably 3.5 to 6.6 wt%, based on the total weight of component B; said foaming agent being preferably water.

It is clear for the skilled person that EO is the abbreviation for ethylene oxide and "PO" is the abbreviation for propylene oxide.

Preferably, component A of the present invention comprises:
A1) 0 to 10 wt%, preferably 0.1 to 8 wt% of 2,2'-diphenylmethane diisocyanate, based on the total weight of component A;
A2) 10 to 30 wt%, preferably 15 to 25 wt% of 2,4'-diphenylmethane diisocyanate, based on the total weight of component A; and
A3) 25 to 75 wt%, preferably 35 to 55 wt% of 4,4'-diphenylmethane diisocyanate, based on the total weight of component A.

Preferably, component B further comprises B6) a tertiary amine catalyst in an amount of 1.0 to 5.0 wt%, preferably 1.8 to 3.0 wt%, based on the total weight of component B.

Preferably, the polyurethane reaction system further comprises B7) 0.1 to 2 wt%, preferably 0.1 to 0.5 wt% of a silicone oil, based on the total weight of component B.

We unexpectedly discovered that the method for preparing a polyurethane rigid foam of the present invention provides a polyurethane rigid foam obtained from a polyurethane reaction system comprising a certain amount of a specific polyether polyol (particularly component B3) and other components compatible with it. Said foam has particularly good physical properties, such as surface hardness, tensile strength, and elongation at break. Among them, the elongation at break is particularly satisfactory.

Another aspect of the present invention is to provide a rigid polyurethane foam, which is prepared by the method for preparing a rigid polyurethane foam of the present invention.

Preferably, the rigid polyurethane foam has an elongation at break of ≥ 23.5%, preferably ≥ 24%, and more preferably ≥ 25% (measured according to DIN-53455-1981).

Preferably, the rigid polyurethane foam has a tensile strength of ≥ 260 Kpa, preferably 270 Kpa (measured according to DIN-53455-1981).

Preferably, the rigid polyurethane foam has a surface hardness of > 40.2 Asker CS, preferably ≥ 41 Asker CS (measured according to Asker CS).

Another aspect of the present invention is to provide a polyurethane composite board. It comprises two surface layers and a rigid polyurethane foam layer located between said two surface layers, wherein the rigid polyurethane foam is prepared by the method for preparing a rigid polyurethane foam of the present invention.

Preferably, the materials of said two surface layers are respectively selected from the group consisting of glass fibers, natural fibers, papers, thermoplastic films, and non-woven fabrics.

Still another aspect of the present invention is to provide a method for preparing a polyurethane composite board, including the steps of applying an adhesive on the inner side of said two surface layers prepared beforehand or both sides of the polyurethane foam layer; arranging the polyurethane foam between said two surface layers and then disposing the obtained assembly in a mold; and keeping the mold closed at a temperature of 100 to 150 °C for 30 to 50 seconds, to obtain the polyurethane composite board.

Yet another aspect of the present invention is the use of the aforementioned polyurethane foam or polyurethane composite board for manufacturing automotive interiors, preferably roof linings, sunroof sliding panels, and pillar trims

Another aspect of the present invention is to provide a polyurethane product comprising the rigid polyurethane foam of the present invention.

Preferably, the polyurethane product is selected from the group consisting of automotive interiors, preferably automotive roof linings, sunroof sliding panels, and pillar trims.

### Embodiments

Various aspects of the invention will now be described in detail.

The first aspect of the present invention is a method for preparing a rigid polyurethane foam having an open-cell content of > 50% by volume (measured according to DIN ISO 4590-86), including preparing said rigid polyurethane foam by the reaction of a reaction system comprising the following components:
Component A, a polyisocyanate;
Component B, comprising:
   B1) an EO- and/or PO-terminated polyether polyol started with glycerol, sucrose and/or sorbitol having a weight average molecular weight of 6000 to 7200 g/mol (measured according to GBT 21863-2008), preferably 6300 to 7000 g/mol and an EO content of > 15.0 wt%, preferably ≥ 16.0 wt%, particularly preferably 17.0 to 25.0 wt%, based on the total weight of B1), in an amount of 20 to 50 wt%, preferably 30 to 45 wt%, based on the total weight of component B;
   B2) a PO-terminated polyether polyol started with glycerol having a weight average molecular weight of 250 to 500 g/mol (measured according to GBT 21863-2008), preferably 300 to 400 g/mol, in an amount of 25 to 50 wt%, preferably 30 to 45 wt%, based on the total weight of component B;
   B3) a PO-terminated polyether polyol started with propylene glycol having a weight average molecular weight of 300 to 500 g/mol (measured according to GBT 21863-2008), preferably 350 to 430 g/mol, in an amount of 9 to 32 wt%, preferably 21 to 29 wt%, more preferably 22 to 29 wt%, based on the total weight of component B;
   B4) a crosslinking agent in an amount of 5 to 8 wt%, based on the total weight of component B; said crosslinking agent being preferably glycerol;
   B5) a foaming agent in an amount of 2 to 8 wt%, preferably 3.5 to 6.6 wt%, based on the total weight of component B; said foaming agent being preferably water.

### Components of the polyurethane reaction system

### Polyisocyanate component

Any organic polyisocyanate can be used to prepare the rigid polyurethane foam of the present invention, including aromatic, aliphatic, and cycloaliphatic polyisocyanates and combinations thereof. The polyisocyanate may be represented by the general formula R(NCO)n, where R represents an aliphatic hydrocarbyl group having 2 to 18 carbon atoms, an aromatic hydrocarbyl group having 6 to 15 carbon atoms, and an araliphatic hydrocarbyl group having 8 to 15 carbon atoms, n = 2 to 4.

Useful polyisocyanates include, but are not limited to, ethylene diisocyanate, tetramethylene 1,4-diisocyanate, hexamethylene diisocyanate (HDI), dodecane-1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethyl cyclohexane, hexahydrotoluene-2,4-diisocyanate, hexahydrophenyl-1,3-diisocyanate, hexahydrophenyl-1,4-diisocyanate, perhydro-diphenylmethane 2,4-diisocyanate , perhydro-diphenylmethane 4,4-diisocyanate, phenylene 1,3-diisocyanate, phenylene 1,4-diisocyanate, stilbene 1,4-diisocyanate, 3,3-dimethyl-4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanates and/or multinuclear homologues of diphenylmethane diisocyanates, polyphenyl polymethylene polyisocyanates (polymeric MDI), naphthylene-1,5-diisocyanates (NDI), isomers thereof, and any mixture of them and their isomers.

Useful polyisocyanates also include isocyanates modified with carbodiimide, allophanate, or isocyanurate structure, preferably, but not limited to, diphenylmethane diisocyanates, carbodiimide-modified diphenylmethane diisocyanates, isomers thereof, mixtures of them and their isomers.

When used in the present invention, polyisocyanates include isocyanate dimers, trimers, tetramers, or a combination thereof.

In a preferred embodiment of the present invention, the polyisocyanate component is polymerized MDI.

In a preferred embodiment of the present invention, the polyisocyanate component comprises A1) 0 to 10 wt%, preferably 0.1 to 8 wt% of 2,2'-diphenylmethane diisocyanate, based on the total weight of component A; A2) 0 to 30 wt%, preferably 10 to 25 wt% of 2,4'-diphenylmethane diisocyanate, based on the total weight of component A; and A3) 25 to 75 wt%, preferably 35 to 55 wt% of 4,4'-diphenylmethane diisocyanate, based on the total weight of component A.

The organic polyisocyanate of the present invention has a NCO content of 20 to 33 wt%, preferably 25 to 32 wt%, and particularly preferably 30 to 32 wt%. The NCO content was measured according to GB/T 12009.4-2016.

The organic polyisocyanates can also be used in the form of polyisocyanate prepolymers. These polyisocyanate prepolymers can be obtained by reacting an excess of the above-mentioned organic polyisocyanate with a compound having at least two isocyanate-reactive groups, for example, at a temperature of 30 to 100 °C, preferably about 80 °C. The polyisocyanate prepolymer of the present invention has a NCO content of 20 to 33 wt%, preferably 25 to 32 wt%. The NCO content was measured according to GB/T 12009.4-2016.

### Polyol component

The polyol of the present invention is preferably a polyether polyol and/or a mixture of polyether polyols. At least one of the polyether polyols is a polyol started with glycerol. The polyether polyol has a functionality of 2 to 4 and a hydroxyl value of 20 to 600, preferably 50 to 500, and particularly preferably 300 to 400. The skilled person understands that the unit of the hydroxyl value is mg KOH/g unless otherwise indicated.

The polyether polyol can be prepared by a known process and are usually prepared by reacting ethylene oxide or propylene oxide with ethylene glycol, 1,2-propylene glycol, 1,3-propylene glycol, diethylene glycol, glycerol, trimethylol propane, pentaerythritol, triethanol amine, toluene diamine , sorbitol and sucrose by using glycerol or propylene glycol as a starter.

In addition, the polyether polyol can also be prepared by reacting at least one alkylene oxide containing 2 to 4 carbon atoms in the alkylene group with a compound containing 2 to 8, preferably, but not limited to, 3 to 8 active hydrogen atoms, or other reactive compounds in the presence of a catalyst.

Examples of the catalyst are alkali metal hydroxides such as sodium hydroxide, potassium hydroxide, or alkoxides of alkali metals such as sodium methoxide, sodium ethoxide, potassium ethoxide or potassium isopropoxide.

Useful alkylene oxides include, but are not limited to, tetrahydrofuran, ethylene oxide, 1,2-propylene oxide, 1,2-butylene oxide, 2,3-butylene oxide, styrene oxide, and any mixture thereof.

Useful compounds containing active hydrogen atoms include polyhydroxy compounds, preferably, but not limited to, water, ethylene glycol, 1,2-propylene glycol, 1,3-propylene glycol, diethylene glycol, trimethylol propane, any mixtures thereof, more preferably polyols, especially alcohols with three or more hydroxy groups, such as glycerol, trimethylol propane, pentaerythritol, sorbitol and sucrose. Useful compounds containing active hydrogen atoms also include, but preferably not limited to, organic dicarboxylic acids such as succinic acid, adipic acid, phthalic acid, and terephthalic acid, or aromatic or aliphatic substituted diamines such as ethylene diamine, diethylene triamine, triethylene tetramine, propylene diamine, butylene diamine, hexamethylene diamine or toluene diamine.

When used in the present invention, the term "alkylene oxide compound" refers generally to a compound having the following general formula (I): 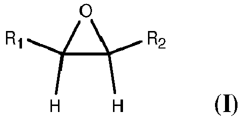 wherein R₁ and R₂ are independently selected from H, C₁-C₆ linear and branched alkyl groups, and phenyl and substituted phenyl groups.

Preferably, R₁ and R₂ are independently selected from H, methyl, ethyl, propyl and phenyl.

A person skilled in the art knows a method for preparing an "alkylene oxide compound", which can be obtained, for example, by the oxidation reaction of an olefin compound.

Examples of alkylene oxide compounds that can be used in the present invention include, but are not limited to: ethylene oxide, 1,2-propylene oxide, 1,2-butylene oxide, 2,3-butylene oxide, styrene oxide or a mixture thereof, particularly preferably a mixture of ethylene oxide and 1,2-propylene oxide.

When used in the present invention, the term "alkylene oxide compound" also includes oxacycloalkanes, examples of which include, but are not limited to, tetrahydrofuran and oxetane.

When used in the present invention, the term "amine" refers to a compound containing a primary amino group, a secondary amino group, a tertiary amino group, or a combination thereof. Examples of compounds that can be used as the amine of the present invention include, but are not limited to, triethanol amine, ethylene diamine, toluene diamine, diethylene triamine, triethylene tetramine and derivatives thereof, preferably ethylene diamine, toluene diamine, particularly preferably toluene diamine.

The polyol component of the polyurethane foam reaction system of the present invention comprises the following polyether polyols:
B1) an EO- and/or PO-terminated polyether polyol started with glycerol, sucrose and/or sorbitol having a weight average molecular weight of 6000 to 7200 g/mol (measured according to GBT 21863-2008), preferably 6300 to 7000 g/mol and an EO content of > 15.0 wt%, preferably ≥ 16.0 wt%, particularly preferably 17.0 to 25.0 wt%, based on the total weight of B1), in an amount of 20 to 50 wt%, preferably 30 to 45 wt%, based on the total weight of component B;
B2) a PO-terminated polyether polyol started with glycerol having a weight average molecular weight of 250 to 500 g/mol (measured according to GBT 21863-2008), preferably 300 to 400 g/mol, in an amount of 25 to 50 wt%, preferably 30 to 45 wt%, based on the total weight of component B;
B3) a PO-terminated polyether polyol started with propylene glycol having a weight average molecular weight of 300 to 500 g/mol (measured according to GBT 21863-2008), preferably 350 to 430 g/mol, in an amount of 9 to 32 wt%, preferably 21 to 29 wt%, more preferably 22 to 29 wt%, based on the total weight of component B.

### Catalyst

The catalyst of the present invention is preferably a tertiary amine catalyst. The tertiary amine catalyst includes, but is not limited to, one, two or more of triethyl amine, tributyl amine, dimethyl ethanolamine, bis(dimethylaminoethyl)ether, and triethylene diamine, N-ethyl morpholine, N,N,N',N'-tetramethyl ethylene diamine, pentamethyl diethylene triamine, dimethylaminopropylene diamine, N,N,N',N'-tetramethyl dipropylene triamine and weak acid-modified products of the amine catalysts. It is present in an amount of 1.0 to 5.0 wt%, preferably 1.8 to 3.0 wt%, based on the total weight of component B.

### Foaming agent

The foaming agent used in the present invention is preferably water, and is present in an amount of 2 to 8 wt%, preferably 3.5 to 6.6 wt%, based on the total weight of component B.

### Crosslinking agent

The crosslinking agent of the present invention is present in an amount of 5 to 8 wt%, based on the total weight of component B. The crosslinking agent is preferably glycerol.

### Surfactant

The surfactant used in the present invention is preferably a silicone oil, in an amount of 0.1 to 2 wt%, preferably 0.1 to 0.5 wt%, based on the total weight of component B.

After repeated experiments, we found unexpectedly that the polyurethane reaction system of the present invention comprising a certain amount of a specific polyether polyol (such as the component B3) and other components compatible with it can improve physical properties of the polyurethane foams, especially the elongation at break thereof.

The second aspect of the present invention is to provide a rigid polyurethane foam, which is prepared by the method for preparing a rigid polyurethane foam of the present invention.

Preferably, the rigid polyurethane foam has an elongation at break of ≥ 23.5%, preferably ≥ 24%, and more preferably ≥ 25% (measured according to DIN-53455-1981).

Preferably, the rigid polyurethane foam has a tensile strength of ≥ 260 Kpa, preferably ≥ 270 Kpa (measured according to DIN-53455-1981).

Preferably, the rigid polyurethane foam has a surface hardness of > 40.2 Asker CS, preferably ≥ 41 Asker CS (measured according to Asker CS).

Another aspect of the present invention is to provide a polyurethane composite board. It comprises two surface layers and a rigid polyurethane foam layer located between said two surface layers, wherein the rigid polyurethane foam is prepared by the method for preparing a rigid polyurethane foam of the present invention.

Preferably, the materials of said two surface layers are respectively selected from the group consisting of glass fibers, natural fibers, papers, thermoplastic films, and non-woven fabrics.

Still another aspect of the present invention is to provide a method for preparing a polyurethane composite board, including the steps of applying an adhesive on the inner side of said two surface layers prepared beforehand or both sides of the polyurethane foam layer; arranging the polyurethane foam between said two surface layers and then disposing the obtained assembly in a mold; and keeping the mold closed at a temperature of 100 to 150 °C for 30 to 50 seconds, to obtain the polyurethane composite board.

Yet another aspect of the present invention is the use of the aforementioned polyurethane foam or polyurethane composite board for manufacturing automotive interiors, preferably roof linings, sunroof sliding panels, and pillar trims.

Another aspect of the present invention is to provide a polyurethane product comprising the rigid polyurethane foam of the present invention.

Preferably, the polyurethane product is selected from the group consisting of automotive interiors, preferably automotive roof linings, sunroof sliding panels, and pillar trims.

Unless defined otherwise, all technical and scientific terms used herein have the same meaning as commonly understood by one of ordinary skill in the art to which this invention belongs. When the definitions of the terms herein are inconsistent with the meanings commonly understood by those skilled in the art to which this invention belongs, the definitions described herein shall apply.

Unless otherwise stated, all numerical values for describing the amounts of components, reaction conditions, etc. used herein are understood to be modified by the term "about".

As used herein, "and/or" means one or all of the elements mentioned.

As used herein, "including" and "comprising" encompass cases where only the mentioned elements are present, and also cases where there are other elements not mentioned, in addition to the mentioned elements.

Unless stated otherwise, all percentages herein refer to weight percentages.

The invention is now described by way of examples for purposes of illustration and not limitation.

### Examples

The types, sources, and proportions of raw materials of the present invention are detailed in Table 1 below.

### Description of test methods:

Functionality refers to the value calculated according to the formula in the industry:
functionality = hydroxyl value * molecular weight / 56100; where molecular weight is measured by GPC high performance liquid chromatography;
Core density refers to the density in the central part of foams measured under the condition of excessive filling in the mold used in the process for manufacturing polyurethane foam composite boards, that is, the density of the molded foam core, determined by ASTM D 1622-03;
Surface hardness was measured using Asker CS;
Tensile strength and elongation at break were measured according to DIN-53455-1981.

The types, sources, and proportions of raw materials of the present invention are detailed in Table 1.

### Preparation of rigid polyurethane foams of the present invention

Examples 1 to 3 and Comparative Example 1:
The polyisocyanate of component A and the components of component B were mixed thoroughly under stirring according to the specific weight parts listed in Table 1 and then foamed to obtain the polyurethane foams of the Examples and the Comparative Example.

The test results are shown in Table 1 (the polyethers in the following table refer to polyether polyols).

| Component | Typ | Supplier | OH.V. | Ex. 1 | Ex. 2 | Ex. 3 | Comp. Ex. 1 |
|---|---|---|---|---|---|---|---|
| Polyether 1 | 1629LY | Covestro | 31.5 | 37.50 | 37.50 | 37.50 | 37.50 |
| Polyether 2 | NJ 303 | Ningwu Chemical | 475 | 38.00 | 38.00 | 38.00 | 38.00 |
| Polyether 3 | Arcol 1003 | Covestro | 280 | 21.00 | 25.00 | 29.00 | 35.00 |
| Silicone oil | SBU-001 | Shin-Etsu Chemical | | 0.30 | 0.30 | 0.30 | 0.30 |
| Crosslinking agent, Glycerol | | Commercially available | 1827 | 7.30 | 7.30 | 7.30 | 7.30 |
| Catalyst | PU1748 | Covestro | 80 | 2.40 | 2.40 | 2.40 | 2.40 |
| Water | | | 6233 | 4.50 | 4.50 | 4.50 | 4.50 |
| Total amount of component B | | | | 111.0 | 115.0 | 119.0 | 125.0 |
| Isocyanate | Desmodur 0589 | Covestro | 32.0% | 177.6 | 184.0 | 190.5 | 200.1 |
| Ratio of I/P | | | | 1.60 | 1.60 | 1.60 | 1.60 |
| Test Results | | | | | | | |
| Moisture content | | | % | 4.47 | 4.49 | 4.48 | 4.48 |
| Stirring speed | | | rpm | 1700 | 1700 | 1700 | 1700 |
| Stirring time | | | s | 9 | 9 | 9 | 9 |
| Ambient temperature | | | □ | 22 | 22 | 22 | 22 |
| Cream time | | | s | 60 | 64 | 63 | 63 |
| Gel time | | | s | 213 | 215 | 219 | 214 |
| Core density | | | Kg/m³ | 31.1 | 30.4 | 30.5 | 30.5 |
| Surface hardness | | | CS | 46.8 | 42.4 | 41.7 | 40.1 |
| Tensile Strength | | | Kpa | 300 | 274 | 281 | 256 |
| Elongation at break | | | % | 25.9 | 27.6 | 26.5 | 20.7 |

It can be seen from the test results in Table 1 that adding a certain amount of the polyether polyol preferred in the present invention can provide a polyurethane foam with better physical properties, especially better elongation at break.

Although the present invention has been described in detail as above for the purpose of the present invention, it should be understood that this detailed description is merely exemplary. In addition to the contents defined by the claims, the present invention can be implemented in other specific forms without departing from the spirit or main characteristics of the present invention.

## Claims

1. A method for preparing a rigid polyurethane foam having an open-cell content of > 50% by volume (measured according to DIN ISO 4590-86), including preparing said rigid polyurethane foam by the reaction of a reaction system comprising the following components:
Component A, a polyisocyanate;
Component B, comprising:
B1) an EO- and/or PO-terminated polyether polyol started with glycerol, sucrose and/or sorbitol having a weight average molecular weight of 6000 to 7200 g/mol (measured according to GBT 21863-2008), preferably 6300 to 7000 g/mol and an EO content of > 15.0 wt%, preferably ≥ 16.0 wt%, particularly preferably 17.0 to 25.0 wt%, based on the total weight of B1), in an amount of 20 to 50 wt%, preferably 30 to 45 wt%, based on the total weight of component B;
B2) a PO-terminated polyether polyol started with glycerol having a weight average molecular weight of 250 to 500 g/mol (measured according to GBT 21863-2008), preferably 300 to 400 g/mol, in an amount of 25 to 50 wt%, preferably 30 to 45 wt%, based on the total weight of component B;
B3) a PO-terminated polyether polyol started with propylene glycol having a weight average molecular weight of 300 to 500 g/mol (measured according to GBT 21863-2008), preferably 350 to 430 g/mol, in an amount of 9 to 32 wt%, preferably 21 to 29 wt%, more preferably 22 to 29 wt%, based on the total weight of component B;
B4) a crosslinking agent in an amount of 5 to 8 wt%, based on the total weight of component B;
B5) a foaming agent in an amount of 2 to 8 wt%, preferably 3.5 to 6.6 wt%, based on the total weight of component B.

2. The method according to claim 1, wherein component A comprises:
A1) 0 to 10 wt%, preferably 0.1 to 8 wt% of 2,2'-diphenylmethane diisocyanate, based on the total weight of component A;
A2) 10 to 30 wt%, preferably 15 to 25 wt% of 2,4'-diphenylmethane diisocyanate, based on the total weight of component A; and
A3) 25 to 75 wt%, preferably 35 to 55 wt% of 4,4'-diphenylmethane diisocyanate, based on the total weight of component A.

3. The method according to claim 1, wherein component B further comprises B6) a tertiary amine catalyst in an amount of 1.0 to 5.0 wt%, preferably 1.8 to 3.0 wt%, based on the total weight of component B.

4. The method according to any one of claims 1 to 3, wherein the polyurethane reaction system further comprises B7) 0.1 to 2 wt%, preferably 0.1 to 0.5 wt% of a silicone oil, based on the total weight of component B.

5. A rigid polyurethane foam, prepared by the method for preparing a rigid polyurethane foam according to any one of claims 1 to 4.

6. The rigid polyurethane foam according to claim 5, wherein the rigid polyurethane foam has an elongation at break of ≥ 23.5%, preferably ≥ 24%, more preferably ≥ 25% (measured according to DIN-53455-1981).

7. The rigid polyurethane foam according to claim 5 or 6, wherein the rigid polyurethane foam has a tensile strength of ≥ 260 Kpa, preferably ≥ 270 Kpa (measured according to DIN-53455-1981).

8. The rigid polyurethane foam according to claim 5 or 6, wherein the rigid polyurethane foam has a surface hardness of > 40.2 Asker CS, preferably ≥ 41 Asker CS (measured according to Asker CS).

9. A polyurethane composite board comprising two surface layers and a rigid polyurethane foam layer located between said two surface layers, wherein the rigid polyurethane foam is prepared by the method according to any one of claims 1 to 4.

10. The polyurethane composite board according to claim 9, wherein the materials of said two surface layers are respectively selected from the group consisting of glass fibers, natural fibers, papers, thermoplastic films, and non-woven fabrics.

11. A method for preparing a polyurethane composite board according to claim 9 or 10, including the steps of:
applying an adhesive on the inner side of said two surface layers prepared beforehand or both sides of the polyurethane foam layer;
arranging the polyurethane foam between said two surface layers and then disposing the obtained assembly in a mold, and
keeping the mold closed at a temperature of 100 to 150 °C for 30 to 50 seconds, to obtain the polyurethane composite board.

12. Use of the rigid polyurethane foam according to any one of claims 5 to 8 for manufacturing automotive interiors, preferably roof linings, sunroof sliding panels, and pillar trims.

13. A polyurethane product comprising the rigid polyurethane foam according to any one of claims 5 to 8.

14. The polyurethane product according to claim 13, wherein the polyurethane product is selected from the group consisting of automotive interiors, preferably roof linings, sunroof sliding panels, and pillar trims.
